# EUROPÄISCHE PATENTSCHRIFT

(11) **EP 2 104 651 B1**
(45) Veröffentlichungstag und Bekanntmachung des Hinweises auf die Patenterteilung: **15.03.2017**
(21) Anmeldenummer: 07856110.7
(22) Anmeldetag: 13.12.2007
(51) Int. Cl.: B29D 11/00, F21S 8/10, C03B 11/08

(54) **HERSTELLUNGSVERFAHREN FÜR EINE SCHEINWERFERLINSE**
PRODUCTION METHOD FOR A HEADLIGHT LENS
PROCÉDÉ DE FABRICATION D'UNE LENTIELLE DE PROJECTEUR

(30) Priorität: 18.12.2006 DE 102006060141
(43) Veröffentlichungstag der Anmeldung: 30.09.2009
(73) Patentinhaber: DOCTER OPTICS GMBH, 07806 Neustadt an der Orla (DE)
(72) Erfinder: ERWARD, Klaus, 07929 Saalburg-Ebersdorf (DE); SYKURA, Franz, 07907 Schleiz/Lössau (DE)
(74) Vertreter: Kiriczi, Sven Bernhard
(86) Internationale Anmeldenummer: PCT/DE2007/002260
(87) Internationale Veröffentlichungsnummer: WO 2008/074304

(56) Entgegenhaltungen:
- EP-A- 0 969 246
- EP-A- 1 584 863
- EP-A- 1 645 545
- BE-A- 393 553
- DE-A1- 10 043 065
- DE-A1-102005 009 556
- DE-U1-202006 005 261
- GB-A- 1 289 776
- US-A1- 2005 024 889
- US-A1- 2005 225 999

## Beschreibung

Die Erfindung betrifft eine Scheinwerferlinse für einen Fahrzeugscheinwerfer, insbesondere für einen Kraftfahrzeugscheinwerfer, sowie einen Fahrzeugscheinwerfer.

Eine vorgenannte Scheinwerferlinse ist z.B. aus der US 3 708 221, der WO 02/31543 A1, der WO 03/074251 A1 und der DE 100 52 653 A1 bekannt. Weitere Fahrzeugscheinwerfer sind z.B. aus der DE 100 33 766 A1, der DE 101 18 687 A1 und der DE 198 29 586 A1 bekannt.

Die DE 203 20 546 U1 offenbart eine beidseitig blankgepresste Linse mit einer gekrümmten Oberfläche, mit einer planen Oberfläche und mit einem am Linsenrand angeformten Halterand, wobei am Halterand ein gegenüber der planen Oberfläche vorstehender mindestens 0,2 mm dicker Auflagerand angeformt ist. Der Auflagerand ist dabei am Außenumfang der Scheinwerferlinse angeformt. Eine weitere Scheinwerferlinse mit einem Auflagerand offenbart z.B. die DE 10 2004 048 500 A1.

Die DE 20 2004 005 936 U1 offenbart eine Linse für Beleuchtungszwecke, insbesondere eine Linse für einen Scheinwerfer zur Abbildung des von einer Lichtquelle ausgesandten und einem Reflektor reflektierten Lichtes zur Erzeugung eines vorgegebenen Beleuchtungsmusters, mit zwei einander gegenüberliegenden Oberflächen, wobei an mindestens einer ersten Oberfläche Bereiche mit unterschiedlicher optischer Streuwirkung vorgesehen sind.

Die EP 0 969 246 A2 offenbart eine überdimensionierte Linse, wobei der Linsenschliff und die entsprechende Projektionsebene und Projektionsparameter des Reflektorspiegels so zur Linse bemessen sind, dass nur ein innerer Teilbereich der Linse direkt genutzt wird. Der überdimensionierte Randbereich dient dabei lediglich der optischen Vergrößerung des Scheinwerferdesigns.

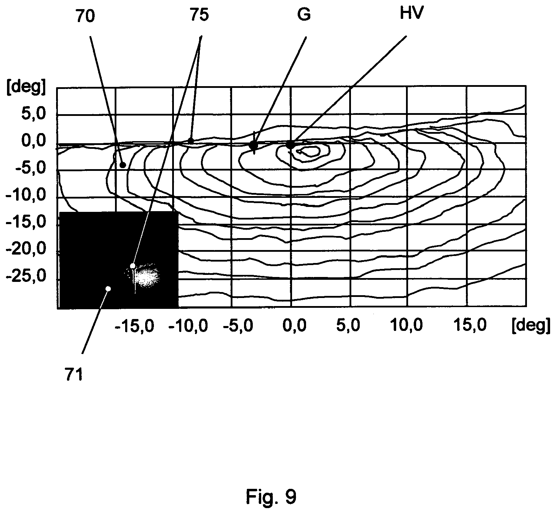

Scheinwerferlinsen unterliegen in Bezug auf ihre optischen Eigenschaften bzw. lichttechnischen Richtwerte engen Designkriterien. Dies gilt insbesondere in Hinblick auf eine Hell-Dunkel-Grenze 75, wie sie beispielhaft in Fig. 9 in einer Grafik 70 und in einer Fotografie 71 dargestellt ist. Wichtige lichttechnische Richtwerte sind dabei der Gradient G der Hell-Dunkel-Grenze 75 und der Blendwert HV des Fahrzeugscheinwerfers, in den die Scheinwerferlinse eingebaut wird.

Es ist Aufgabe der Erfindung, die Kosten für die Herstellung einer Scheinwerferlinse für einen Fahrzeugscheinwerfer, insbesondere für einen Kraftfahrzeugscheinwerfer, zu senken, ohne dass lichttechnische Richtwerte überschritten werden.

Vorgenannte Aufgabe wird durch ein Verfahren zum Herstellen einer Scheinwerferlinse für einen Fahrzeugscheinwerfer, insbesondere für einen Kraftfahrzeugscheinwerfer, gelöst, wobei die Scheinwerferlinse einen Linsenkörper aus einem transparenten Material mit einer im Wesentlichen planen optisch wirksamen Oberfläche und einer konvex gekrümmten optisch wirksamen Oberfläche umfasst, wobei ein Vorformling zwischen einer ersten Form zum Pressen der konvex gekrümmten optisch wirksamen Oberfläche und einer zweiten Form zum Pressen der im Wesentlichen planen optisch wirksamen Oberfläche, die eine erste Teilform und eine die erste Teilform umschließende ringförmige zweite Teilform umfasst, zu der Scheinwerferlinse mit einem angeformten Linsenrand blankgepresst wird, wobei durch einen von dem Volumen des Vorformlings abhängigen Versatz zwischen der zweiten Teilform und der ersten Teilform eine Stufe in die Scheinwerferlinse gepresst wird, und wobei die erste Teilform zumindest im Bereich des Versatzes gegenüber der zweiten Teilform zurückgesetzt wird, wobei die im Wesentlichen plane optisch wirksame Oberfläche um nicht mehr als 1 mm in Richtung der optischen Achse der Scheinwerferlinse über den Linsenrand oder einen Teil des Linsenrandes hinausragt.

Es ist insbesondere vorgesehen, dass die im Wesentlichen plane optisch wirksame Oberfläche eine einer Lichtquelle zuzuwendende optisch wirksame Oberfläche ist. Es ist insbesondere vorgesehen, dass die konvex gekrümmte optisch wirksame Oberfläche eine einer Lichtquelle abzuwendende optisch wirksame Oberfläche ist. Die konvex gekrümmte optisch wirksame Oberfläche ist in vorteilhafter Ausgestaltung asphärisch.

Transparentes Material ist im Sinne der Erfindung insbesondere Glas. Unter Blankpressen soll im Sinne der Erfindung insbesondere verstanden werden, eine optisch wirksame Oberfläche derart zu pressen, dass eine anschließende Nachbearbeitung der Kontur dieser optisch wirksamen Oberfläche entfallen kann bzw. entfällt bzw. nicht vorgesehen ist. Ein angeformter Linsenrand soll im Sinne der Erfindung insbesondere keine optisch wirksame Oberfläche umfassen.

Die Stufe verläuft in einer Ausgestaltung der Erfindung im Wesentlichen parallel zu der optischen Achse der Scheinwerferlinse. In einer anderen Ausgestaltung ist die Stufe (gegebenenfalls zusätzlich) gegenüber der optischen Achse der Scheinwerferlinse in Richtung der optischen Achse geneigt.

In weiterhin vorteilhafter Ausgestaltung der Erfindung ist der Abstand zwischen der ersten Teilform und der ersten Form von dem Volumen des Vorformlings abhängig. In weiterhin vorteilhafter Ausgestaltung der Erfindung ist der Abstand zwischen der zweiten Teilform und der ersten Form von dem Volumen des Vorformlings unabhängig. In weiterhin vorteilhafter Ausgestaltung der Erfindung berührt die zweite Teilform die erste Form. In weiterhin vorteilhafter Ausgestaltung der Erfindung wird mittels der ersten Form eine Anlageschulter in den Linsenrand gepresst, wobei die Anlageschulter vorteilhafterweise im Wesentlichen orthogonal zur optischen Achse der Scheinwerferlinse verläuft.

In weiterhin vorteilhafter Ausgestaltung der Erfindung ragt die im Wesentlichen plane optisch wirksame Oberfläche um nicht mehr als 0,5 mm in Richtung der optischen Achse der Scheinwerferlinse über den Linsenrand oder einen Teil des Linsenrandes hinaus. D.h. insbesondere, dass die Höhe einer Stufe nicht mehr als 1 mm, vorteilhafterweise nicht mehr als 0,5 mm, beträgt.

In weiterhin vorteilhafter Ausgestaltung der Erfindung beträgt die Dicke des Linsenrandes zumindest 2 mm. In weiterhin vorteilhafter Ausgestaltung der Erfindung beträgt die Dicke des Linsenrandes nicht mehr als 5 mm.

In weiterhin vorteilhafter Ausgestaltung der Erfindung beträgt der Durchmesser der Scheinwerferlinse zumindest 40 mm. In weiterhin vorteilhafter Ausgestaltung der Erfindung beträgt der Durchmesser der Scheinwerferlinse nicht mehr als 100 mm.

In weiterhin vorteilhafter Ausgestaltung der Erfindung beträgt der Durchmesser der im Wesentlichen planen optisch wirksamen Oberfläche nicht mehr als 110% des Durchmessers der konvex gekrümmten optisch wirksamen Oberfläche. In weiterhin vorteilhafter Ausgestaltung der Erfindung beträgt der Durchmesser der im Wesentlichen planen optisch wirksamen Oberfläche zumindest 90% des Durchmessers der konvex gekrümmten optisch wirksamen Oberfläche.

Die im Wesentlichen plane optisch wirksame Oberfläche und/oder die konvex gekrümmte optisch wirksame Oberfläche ist in einer Ausgestaltung der Erfindung rund, insbesondere kreisrund bzw. im Wesentlichen kreisrund.

In weiterhin vorteilhafter Ausgestaltung der Erfindung verläuft die Oberfläche des Linsenrandes oder zumindest ein überwiegender oder wesentlicher Teil der Oberfläche des Linsenrandes am Außenumfang des Linsenrandes im Wesentlichen parallel zur optischen Achse der Scheinwerferlinse. In diesem Sinne soll im Wesentlichen parallel zur optischen Achse insbesondere eine Neigung gegenüber der optischen Achse von 0° bis 8°, insbesondere 0° bis 5°, bedeuten oder umfassen.

Die im Wesentlichen plane optisch wirksame Oberfläche und/oder die konvex gekrümmte optisch wirksame Oberfläche besitzt in einer Ausgestaltung zu mehr als der Hälfte oder im Wesentlcihen in Gänze eine Rauhigkeit von weniger als 0,1 µm, insbesondere weniger als 0,08 µm. Rauhigkeit im Sinne der Erfindung soll insbesondere als Ra, insbesondere nach ISO 4287, definiert sein.

Es wird weiterhin ein Verfahren zum Herstellen einer Charge von, insbesondere zumindest sechzehn oder zumindest dreiundfünfzig, Scheinwerferlinsen für einen Fahrzeugscheinwerfer, offenbart, wobei die Scheinwerferlinsen der Charge gemäß dem vorgenannten Verfahren blankgepresst werden. In vorteilhafter Ausgestaltung umfasst die Charge zumindest fünfhundert Scheinwerferlinsen. In weiterhin vorteilhafter Ausgestaftung werden die Scheinwerferlinsen in einen Transportbehälter zum Transport der Scheinwerferlinsen platziert. In weiterhin vorteilhafter Ausgestaltung unterscheidet sich die Höhe einer Stufe einer Scheinwerferlinse der Charge um mehr als 0,05 mm, vorteilhafterweise um mehr als 0,1 mm, von der Höhe einer Stufe einer weiteren Scheinwerferlinse der Charge. Die Stufe verläuft in einer Ausgestaltung im Wesentlichen parallel zu der optischen Achse der Scheinwerferlinse. In einer anderen Ausgestaltung ist die Stufe (gegebenenfalls zusätzlich) gegenüber der optischen Achse der Scheinwerferlinse in Richtung der optischen Achse geneigt.

Es wird weiterhin eine Charge von, insbesondere zumindest sechzehn oder zumindest dreiundfünfizig, einen angeformten Linsenrand aufweisenden blankgepressten Scheinwerferlinsen für Fahrzeugscheinwerfer offenbart, wobei die Scheinwerferlinsen der Charge jeweils einen Linsenkörper aus einem transparenten Material mit jeweils einer im Wesentlichen planen optisch wirksamen Oberfläche und jeweils einer konvex gekrümmten optisch wirksamen Oberfläche umfassen, wobei die im Wesentlichen planen optisch wirksamen Oberflächen in Richtung einer jeweiligen optischen Achse einer Scheinwerferlinse in Form einer Stufe über den jeweiligen Linsenrand oder einen Teil des jeweiligen Linsenrandes hinausragen, und wobei sich die Höhe einer Stufe einer Scheinwerferlinse der Charge um mehr als 0,05 mm, vorteilhafterweise um mehr als 0,1 mm, von der Höhe einer Stufe einer weiteren Scheinwerferlinse der Charge unterscheidet. Die Stufe verläuft in einer Ausgestaltung im Wesentlichen parallel zu der optischen Achse der Scheinwerferlinse. In einer anderen Ausgestaltung ist die Stufe (gegebenenfalls zusätzlich) gegenüber der optischen Achse der Scheinwerferlinse in Richtung der optischen Achse geneigt.

In vorteilhafter Ausgestaltung umfasst die Charge zumindest fünfhundert Scheinwerferlinsen. In weiterhin vorteilhafter Ausgestaltung weisen die Scheinwerfertinsen der Charge am Linsenrand auf einer der Stufe abgewandten Seite der jeweiligen Scheinwerferlinsen jeweils eine Anlageschulter auf, wobei die Anlageschulter vorteilhafterweise im Wesentlichen orthogonal zur optischen Achse der Scheinwerferlinse verläuft.

In weiterhin vorteilhafter Ausgestaltung ragt die im Wesentlichen plane optisch wirksame Oberfläche um nicht mehr als 1 mm, vorteilhafterweise um nicht mehr als 0,5 mm, in Richtung einer optischen Achse der Scheinwerferlinse über den Linsenrand oder einen Teil des Linsenrandes hinaus. D.h. insbesondere, dass die Höhe einer Stufe nicht mehr als 1 mm, vorteilhafterweise nicht mehr als 0,5 mm, beträgt.

In weiterhin vorteilhafter Ausgestaltung beträgt die Dicke des Linsenrandes zumindest 2 mm. In weiterhin vorteilhafter Ausgestaltung beträgt die Dicke des Linsenrandes nicht mehr als 5 mm.

In weiterhin vorteilhafter Ausgestaltung beträgt der Durchmesser der Scheinwerferlinse zumindest 40 mm. In weiterhin vorteilhafter Ausgestaltung beträgt der Durchmesser der Scheinwerferlinse nicht mehr als 100 mm.

In weiterhin vorteilhafter Ausgestaltung beträgt der Durchmesser der im Wesentlichen planen optisch wirksamen Oberfläche nicht mehr als 110% des Durchmessers der konvex gekrümmten optisch wirksamen Oberfläche. In weiterhin vorteilhafter Ausgestaltung beträgt der Durchmesser der im Wesentlichen planen optisch wirksamen Oberfläche zumindest 90% des Durchmessers der konvex gekrümmten optisch wirksamen Oberfläche.

Die im Wesentlichen plane optisch wirksame Oberfläche und/oder die konvex gekrümmte optisch wirksame Oberfläche ist in einer Ausgestaltung rund, insbesondere kreisrund bzw. im Wesentlichen kreisrund.

In weiterhin vorteilhafter Ausgestaltung verläuft die Oberfläche des Linsenrandes oder zumindest ein überwiegender oder wesentlicher Teil der Oberfläche des Linsenrandes am Außenumfang des Linsenrandes im Wesentlichen parallel zur optischen Achse der Scheinwerferlinse. In diesem Sinne soll im Wesentlichen parallel zur optischen Achse insbesondere eine Neigung gegenüber der optischen Achse von 0° bis 8°, insbesondere 0° bis 5°, bedeuten oder umfassen.

Die im Wesentlichen plane optisch wirksame Oberfläche und/oder die konvex gekrümmte optisch wirksame Oberfläche besitzt in einer Ausgestaltung zu mehr als der Hälfte oder im Wesentlichen in Gänze eine Rauhigkeit von weniger als 0,1 µm, insbesondere weniger als 0,08 µm. Rauhigkeit im Sinne soll insbesondere als Ra, insbesondere nach ISO 4287, definiert sein.

Es wird weiterhin ein Transportbehälter zum Transport von Scheinwerferlinsen, offenbart, wobei in dem Transportbehälter eine Vielzahl von Scheinwerferlinsen für Fahrzeugscheinwerfer, insbesondere für Kraftfahrzeugscheinwerfer, angeordnet ist, wobei die Scheinwerferlinsen der Vielzahl von Scheinwerferlinsen jeweils einen blankgepressten Linsenkörper aus einem transparenten Material mit jeweils einer im Wesentlichen planen optisch wirksamen Oberfläche und jeweils einer konvex gekrümmten optisch wirksamen Oberfläche umfassen, und wobei die Scheinwerferlinsen der Vielzahl von Scheinwerferlinsen außen an ihren konvex gekrümmten optisch wirksamen Oberflächen jeweils einen Linsenrand umfassen, wobei die im Wesentlichen planen optisch wirksamen Oberflächen in Richtung einer jeweiligen optischen Achse einer Scheinwerferlinse in Form einer Stufe über den jeweiligen Linsenrand oder einen Teil des jeweiligen Linsenrandes hinausragen und wobei sich die Höhe einer Stufe einer Scheinwerferlinse der Vielzahl von Scheinwerferlinsen um mehr als 0,05 mm, vorteilhafterweise um mehr als 0,1 mm, von der Höhe einer Stufe einer weiteren Scheinwerferlinse der Vielzahl von Scheinwerferlinsen unterscheidet. Die Stufe verläuft in einer Ausgestaltung im Wesentlichen parallel zu der optischen Achse der Scheinwerferlinse. In einer anderen Ausgestaltung ist die Stufe (gegebenenfalls zusätzlich) gegenüber der optischen Achse der Scheinwerferlinse in Richtung der optischen Achse geneigt.

Es wird weiterhin eine Scheinwerferlinse für einen Fahrzeugscheinwerfer, insbesondere für einen Kraftfahrzeugscheinwerfer, offenbart, wobei die Scheinwerferlinse einen blankgepressten Linsenkörper aus einem transparenten Material mit einer im Wesentlichen planen optisch wirksamen Oberfläche und einer konvex gekrümmten optisch wirksamen Oberfläche umfasst, und wobei die Scheinwerferlinse außen an der konvex gekrümmten optisch wirksamen Oberfläche einen Linsenrand umfasst, wobei die im Wesentlichen plane optisch wirksame Oberfläche in Richtung einer optischen Achse der Scheinwerferlinse über den Linsenrand oder einen Teil des Linsenrandes stufenförmig hinausragt, und wobei die Scheinwerferlinse am Linsenrand auf der der Stufe abgewandten Seite der Scheinwerferlinse eine Anlageschulter aufweist, wobei die Anlageschulter vorteilhafterweise im Wesentlichen orthogonal zur optischen Achse der Scheinwerferlinse verläuft, und wobei die im Wesentlichen plane optisch wirksame Oberfläche vorteilhafterweise eine Rauhigkeit von weniger als 0,1 µm, insbesondere weniger als 0,08 µm, aufweist. Rauhigkeit im Sinne soll insbesondere als Ra, insbesondere nach ISO 4287, definiert sein.

Die Stufe verläuft in einer Ausgestaltung im Wesentlichen parallel zu der optischen Achse der Scheinwerferlinse. In einer anderen Ausgestaltung ist die Stufe (gegebenenfalls zusätzlich) gegenüber der optischen Achse der Scheinwerferlinse in Richtung der optischen Achse geneigt.

In weiterhin vorteilhafter Ausgestaltung ragt die im Wesentlichen plane optisch wirksame Oberfläche um nicht mehr als 1 mm, vorteilhafterweise um nicht mehr als 0,5 mm, in Richtung einer optischen Achse der Scheinwerferlinse über den Linsenrand oder einen Teil des Linsenrandes hinaus. D.h. insbesondere, dass die Höhe einer Stufe nicht mehr als 1 mm, vorteilhafterweise nicht mehr als 0,5 mm, beträgt.

In weiterhin vorteilhafter Ausgestaltung beträgt die Dicke des Linsenrandes zumindest 2 mm. In weiterhin vorteilhafter Ausgestaltung beträgt die Dicke des Linsenrandes nicht mehr als 5 mm.

In weiterhin vorteilhafter Ausgestaltung beträgt der Durchmesser der Scheinwerferlinse zumindest 40 mm. In weiterhin vorteilhafter Ausgestaltung beträgt der Durchmesser der Scheinwerferlinse nicht mehr als 100 mm.

In weiterhin vorteilhafter Ausgestaltung beträgt der Durchmesser der im Wesentlichen planen optisch wirksamen Oberfläche nicht mehr als 110% des Durchmessers der konvex gekrümmten optisch wirksamen Oberfläche. In weiterhin vorteilhafter Ausgestaltung beträgt der Durchmesser der im Wesentlichen planen optisch wirksamen Oberfläche zumindest 90% des Durchmessers der konvex gekrümmten optisch wirksamen Oberfläche.

Die im Wesentlichen plane optisch wirksame Oberfläche und/oder die konvex gekrümmte optisch wirksame Oberfläche ist in einer Ausgestaltung rund, insbesondere kreisrund bzw. im Wesentlichen kreisrund.

Die konvex gekrümmte optisch wirksame Oberfläche besitzt in einer Ausgestaltung zu mehr als der Hälfte oder im Wesentlcihen in Gänze eine Rauhigkeit von weniger als 0,1 µm, insbesondere weniger als 0,08 µm. Rauhigkeit im Sinne der Erfindung soll insbesondere als Ra, insbesondere nach ISO 4287, definiert sein.

Es kann vorgesehen sein, dass eine im Wesentlichen plane optisch wirksame Oberfläche eine (konkave) Krümmung mit einem in der Größenordnung von 0,5 m liegenden Krümmungsradius umfasst.

Weitere Vorteile und Einzelheiten ergeben sich aus der nachfolgenden Beschreibung. Dabei zeigen:
- Fig. 1: ein Kraftfahrzeug,
- Fig. 2: eine schematische Darstellung eines Fahrzeugscheinwerfers,
- Fig. 3: einen Querschnitt durch ein Ausführungsbeispiel einer Scheinwerferlinse für einen Fahrzeugscheinwerfer gemäß Fig. 2,
- Fig. 4: einen Ausschnitt des Querschnitts gemäß Fig. 3,
- Fig. 5: einen ausschnittsweisen Querschnitt durch ein abgewandeltes Ausführungsbeispiel einer Scheinwerferlinse für einen Fahrzeugscheinwerfer gemäß Fig. 2,
- Fig. 6: ein Verfahren zum Herstellen einer Scheinwerferlinse gemäß Fig. 3,
- Fig. 7: eine Vorrichtung zum Pressen einer Scheinwerferlinse gemäß Fig. 3,
- Fig. 8: einen Transportbehälter zum Transportieren einer Vielzahl von Scheinwerferlinsen und
- Fig. 9: eine Leuchtverteilung eines Scheinwerfers.

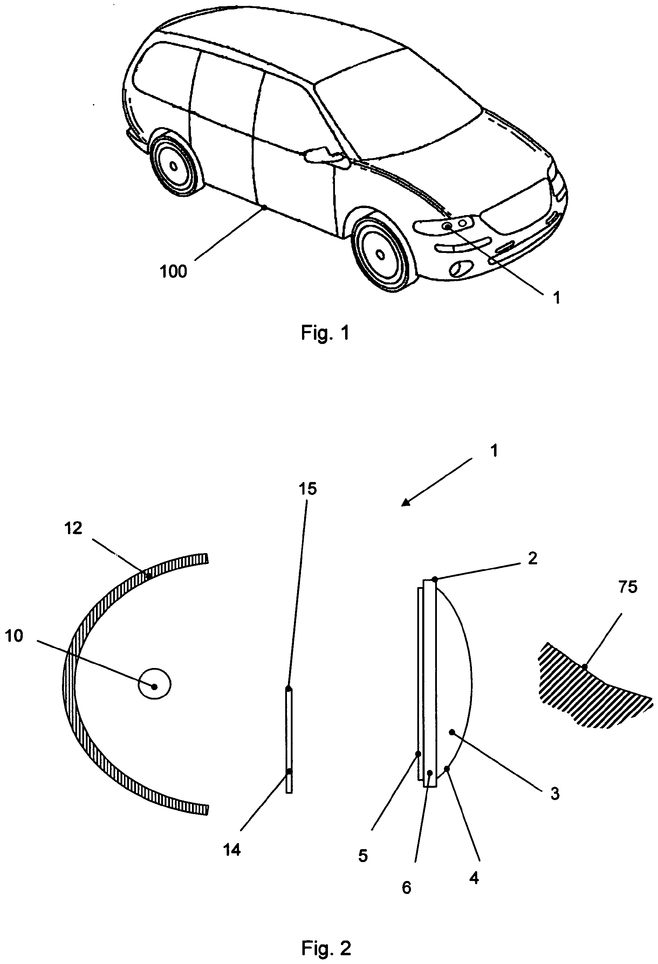

Fig. 1 zeigt ein Kraftfahrzeug 100 mit einem - in Fig. 2 schematisch dargestellten - Fahrzeugscheinwerfer 1 mit einer Lichtquelle 10 zum Erzeugen von Licht, einem Reflektor 12 zum Reflektieren von mittels der Lichtquelle 10 erzeugbarem Licht und einer Blende 14. Der Fahrzeugscheinwerfer 1 umfasst zudem eine einstückige, beidseitig blankgepresste Scheinwerferlinse 2 zur Veränderung der Strahlrichtung von mittels der Lichtquelle 10 erzeugbarem Licht und insbesondere zur Abbildung einer in Fig. 2 mit Bezugszeichen 15 bezeichneten Kante der Blende 14 als Hell-Dunkel-Grenze 75 (siehe auch Fig. 9).

Die Scheinwerferlinse 2 umfasst einen Linsenkörper 3 aus einem transparenten Material, insbesondere Glas, der eine der Lichtquelle 10 zugewandte im Wesentlichen plane optisch wirksame Oberfläche 5 und eine der Lichtquelle 10 abgewandte konvex gekrümmte optisch wirksame Oberfläche 4 umfasst. Die Scheinwerferlinse 2 umfasst zudem einen angeformten Linsenrand 6, mittels dessen die Scheinwerferlinse 2 in dem Fahrzeugscheinwerfer 1 befestigbar ist. Die Elemente in Fig. 2 sind unter Berücksichtigung von Einfachheit und Klarheit und nicht notwendigerweise maßstabsgetreu gezeichnet. So sind z.B. die- Größenordnungen einiger Elemente übertrieben gegenüber anderen Elementen dargestellt, um das Verständnis des Ausführungsbeispiels der vorliegenden Erfindung zu verbessern.

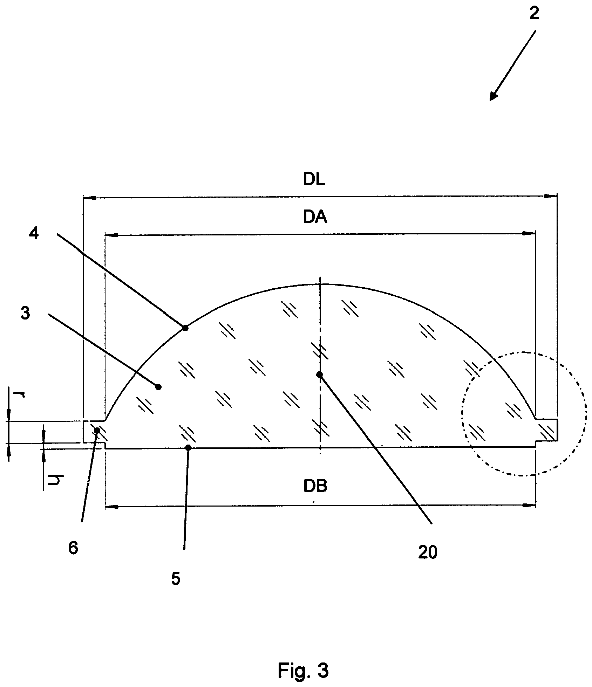

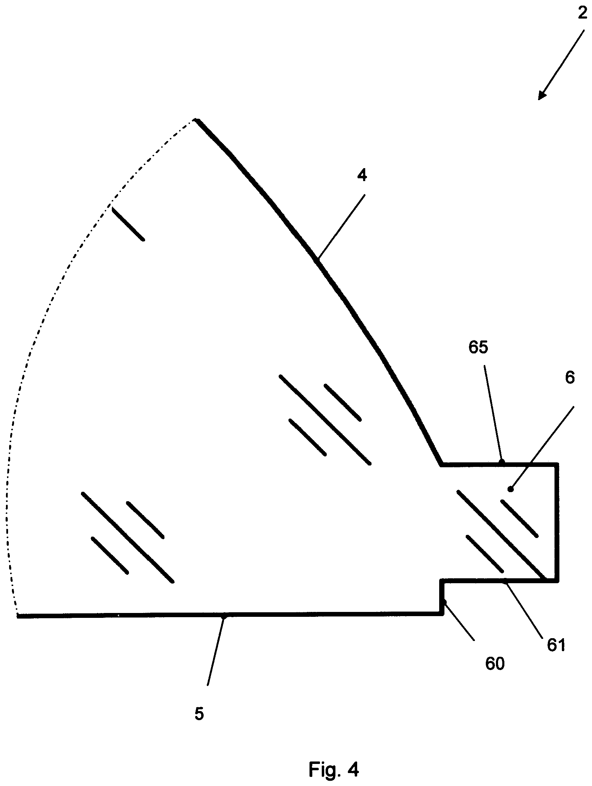

Fig. 3 zeigt einen Querschnitt durch ein Ausführungsbeispiel der Scheinwerferlinse 2 für den Fahrzeugscheinwerfer 1 gemäß Fig. 2. Fig. 4 zeigt einen in Fig. 3 durch einen strichpunktierten Kreis markierten Ausschnitt der Scheinwerferlinse 2. Die im Wesentlichen plane optisch wirksame Oberfläche 5 ragt in Form einer Stufe 60 in Richtung der optischen Achse 20 der Scheinwerferlinse 2 über den Linsenrand 6 bzw. über die der Lichtquelle 10 zugewandte Oberfläche 61 des Linsenrandes 6 hinaus, wobei die Höhe h der Stufe 60 nicht mehr als 1 mm, vorteilhafterweise nicht mehr als 0,5 mm, beträgt. Der Nennwert der Höhe h der Stufe 60 beträgt vorteilhafterweise 0,2 mm. Die Scheinwerferlinse 2 weist zudem am Linsenrand 6 auf der der Stufe 60 abwandten Seite der Scheinwerferlinse 2 eine Anlageschulter 65 auf.

Die Dicke r des Linsenrandes 6 beträgt zumindest 2 mm jedoch nicht mehr als 5 mm. Der Durchmesser DL der Scheinwerferlinse 2 beträgt zumindest 40 mm jedoch nicht mehr als 100 mm. Der Durchmesser DB der im Wesentlichen planen optisch wirksamen Oberfläche 5 ist gleich dem Durchmesser DA der konvex gekrümmten optisch wirksamen Oberfläche 4. In vorteilhafter Ausgestaltung beträgt der Durchmesser DB der im Wesentlichen planen optisch wirksamen Oberfläche 5 nicht mehr als 110% des Durchmessers DA der konvex gekrümmten optisch wirksamen Oberfläche 4. Zudem beträgt der Durchmesser DB der im Wesentlichen planen optisch wirksamen Oberfläche 5 vorteilhafterweise zumindest 90% des Durchmessers DA der konvex gekrümmten optisch wirksamen Oberfläche 4. Der Durchmesser DL der Scheinwerferlinse 2 ist vorteilhafterweise in etwa 5 mm größer als der Durchmesser DB der im Wesentlichen planen optisch wirksamen Oberfläche 5 bzw. als der Durchmesser DA der konvex gekrümmten optisch wirksamen Oberfläche 4.

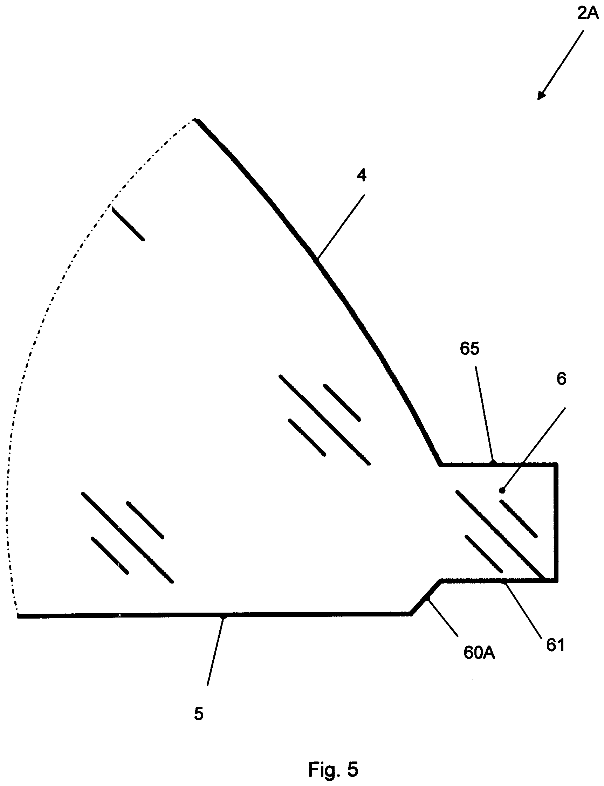

Fig. 5 zeigt eine gegenüber der Scheinwerferlinse 2 abgewandelte Scheinwerferlinse 2A auf, wobei gleiche Bezugszeichen, wie in Bezug auf die Scheinwerferlinse 2 verwendet, gleiche bzw. gleichartige Gegenstände bezeichnen. In Abwandlung zur Scheinwerferlinse 2 weist Scheinwerferlinse 2A eine schräge (z.B. unter einer 45°-Neigung) Stufe 60A auf.

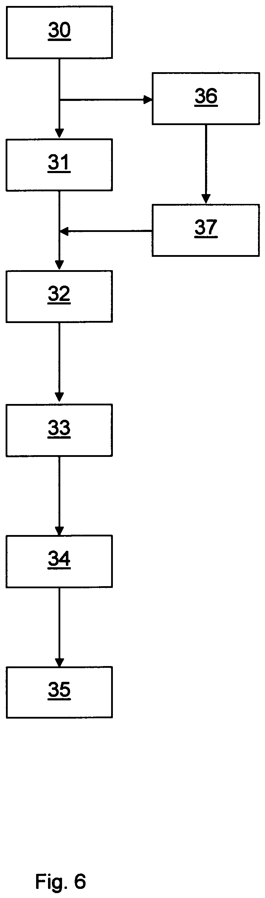

Fig. 6 zeigt ein Verfahren zum Herstellen der Scheinwerferlinse 2. Dabei erfolgt in einem Schritt 30 die Herstellung eines Vorformlings, wie z.B. eines Gobs. Dazu wird Glas in einem Schmelzaggregat, wie einer Wanne, geschmolzen. Das Schmelzaggregat kann z.B. einen regelbaren Auslauf umfassen. Von dem Schmelzaggregat wird flüssiges Glas in eine Vorformvorrichtung verbracht. Diese kann z.B. Formen umfassen, in die eine definierte Glasmenge gegossen wird. Es kann auch vorgesehen werden, dass die Vorformvorrichtung als Injektionspresse zum Pressen (ggf. endkonturnaher) Vorform-Jinge ausgestaltet ist. Es ist vorgesehen, dass das Volumen des Vorformlings um bis zu 3% von einem Sollvolumen für den Vorformling abweichen darf.

Es-folgt ein Schritt 31, in dem der Vorformling an eine-Temperiereinrichtung übergeben wird, mittels der der Temperaturgradient des Vorformlings umgedreht wird. Alternativ wird der Vorformling in einem Schritt 36 abgekühlt und nach Ablauf einer unbestimmten Zeit in einem Schritt 37 erwärmt bzw. erhitzt.

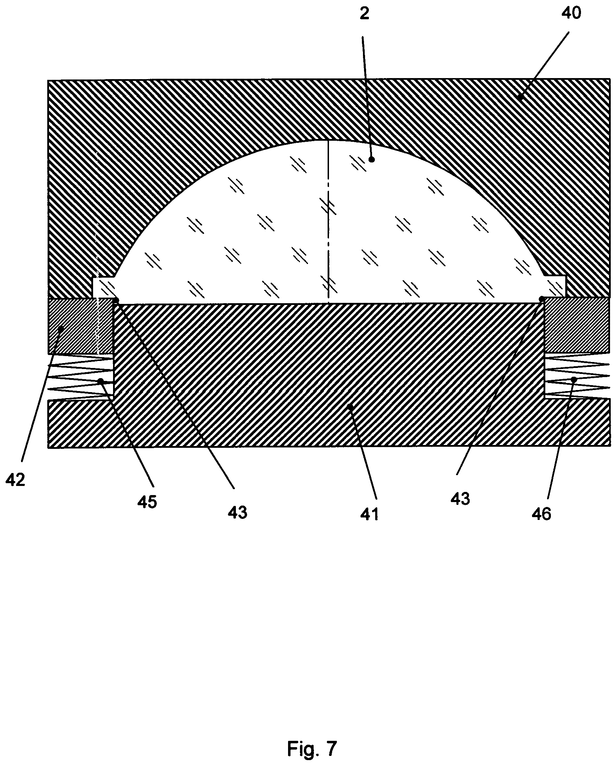

Es folgt ein Schritt 32, in dem der Vorformling - mittels einer in Fig. 7 dargestellten Vorrichtung zum Pressen einer Scheinwerferlinse - zwischen einer ersten Form 40 und einer zweiten Form, die eine erste Teilform 41 und eine die erste Teilform 41 umschließende ringförmige zweite Teilform 42 umfasst, zu einer Scheinwerferlinse 2 mit einem angeformten Linsenrand 6 blankgepresst wird, wobei durch einen von dem Volumen des Vorformlings abhängigen Versatz 43 zwischen der ersten Teilform 41 und der zweiten Teilform 42 die Stufe 60 in die Scheinwerferlinse 2 gepresst wird. Das Pressen erfolgt dabei insbesondere nicht unter Vakuum oder signifikantem Unterdruck. Das Pressen erfolgt insbesondere unter atmosphärischem Luftdruck. Die erste Teilform 41 und die zweite Teilform 42 sind mittels Federn 45 und 46 miteinander kraftgekoppelt. Dabei wird derart gepresst, dass der Abstand zwischen der ersten Teilform 41 und der ersten Form 40 von dem Volumen des Vorformlings bzw. der daraus gepressten Scheinwerferlinse 2 abhängig und der Abstand zwischen der zweiten Teilform 42 und der ersten Form 40 von dem Volumen des Vorformlings bzw. der daraus gepressten Scheinwerferlinse 2 unabhängig ist.

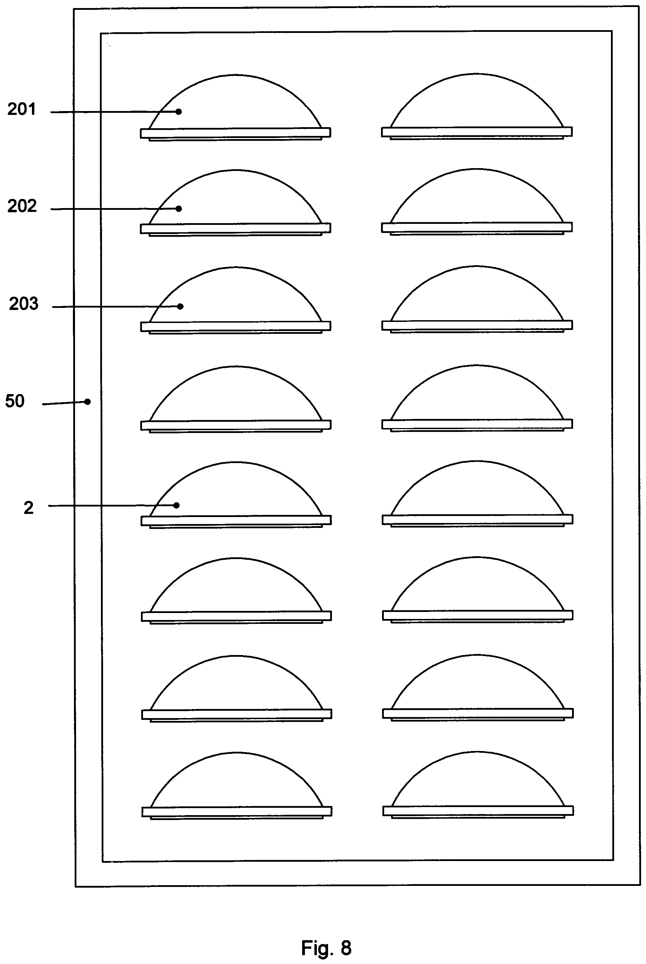

Nach dem Pressen wird die-Scheinwerferlinse-2 in einem Schritt 33 auf eine-Kühlbahn gelegt und abgekühlt. Es folgt ein optionaler Schritt 34, in dem die im Wesentlichen plane Oberfläche 5 poliert wird. Anschließend wird die Scheinwerferlinse 2 in einem Schritt 35 in einen in Fig. 8 dargestellten Transportbehälter 50 zum Transportieren von Scheinwerferlinsen mit weiteren - entsprechend der Scheinwerferlinse 2 ausgestalteter - Scheinwerferlinsen 201, 202, 203 der Charge verpackt. In dem Transportbehälter 50 weicht die Höhe einer Stufe einer Scheinwerferlinse 201 um mehr als 0,05 mm, vorteilhafterweise um mehr als 0,1 mm, von der Höhe einer Stufe einer weiteren Scheinwerferlinse 203 ab.

Es hat sich gezeigt, dass die erfindungsgemäß ausgestaltete Linse in Bezug auf ihre optischen Eigenschaften so robust ist, das die geforderten optischen Eigenschaften, wie sie z.B. unter Bezugnahme auf Fig. 9 erläutert sind, sogar bei vorgenannten Schwankungen im Volumen des Vorformlings eingehalten werden können. Dadurch können die vorgenanten Schwankungen im Volumen des Vorformlings zugelassen und die Kosten für die Herstellung einer derartigen Scheinwerferlinse gesenkt werden.

## Patentansprüche

1. Verfahren zum Herstellen einer Scheinwerferlinse (2) für einen Fahrzeugscheinwerfer, insbesondere für einen Kraftfahrzeugscheinwerfer (1), wobei die Scheinwerferlinse (2) einen Linsenkörper (3) aus einem transparenten Material mit einer im Wesentlichen planen optisch wirksamen Oberfläche (5) und einer konvex gekrümmten optisch wirksamen Oberfläche (4) umfasst, wobei ein Vorformling zwischen einer ersten Form (40) zum Pressen der konvex gekrümmten optisch wirksamen Oberfläche (4) und einer zweiten Form zum Pressen der im Wesentlichen planen optisch wirksamen Oberfläche (5), die eine erste Teilform (41) und eine die erste Teilform (41) umschließende ringförmige zweite Teilform (42) umfasst, zu der Scheinwerferlinse (2) mit einem angeformten Linsenrand (6) blankgepresst wird, wobei durch einen von dem Volumen des Vorformlings abhängigen Versatz (43) zwischen der zweiten Teilform (42) und der ersten Teilform (41) eine Stufe (60) in die Scheinwerferlinse (2) gepresst wird, und wobei die erste Teilform (41) zumindest im Bereich des Versatzes (43) gegenüber der zweiten Teilform (42) zurückgesetzt wird, wobei die im Wesentlichen plane optisch wirksame Oberfläche (5) um nicht mehr als 1 mm in Richtung der optischen Achse (20) der Scheinwerferlinse (2) über den Linsenrand (6) oder einen Teil des Linsenrandes (6) hinausragt.

2. Verfahren nach Anspruch 1, **dadurch gekennzeichnet, dass** der Abstand zwischen der ersten Teilform (41) und der ersten Form (40) von dem Volumen des Vorformlings abhängig ist.

3. Verfahren nach Anspruch 1 oder 2, **dadurch gekennzeichnet, dass** der Abstand zwischen der zweiten Teilform (42) und der ersten Form (40) von dem Volumen des Vorformlings unabhängig ist.

4. Verfahren nach Anspruch 1, 2 oder 3, **dadurch gekennzeichnet, dass** die zweite Teilform (42) die erste Form (40) berührt.

5. Verfahren nach einem der vorhergehenden Ansprüche, **dadurch gekennzeichnet, dass** mittels der ersten Form (40) eine Anlageschulter in den Linsenrand (6) gepresst wird.

6. Verfahren nach Anspruch 5, **dadurch gekennzeichnet, dass** die Anlageschulter im Wesentlichen orthogonal zur optischen Achse der Scheinwerferlinse (2) verläuft.

7. Verfahren nach einem der vorhergehenden Ansprüche, **dadurch gekennzeichnet, dass** die Dicke (r) des Linsenrandes (6) zumindest 2 mm beträgt.

8. Verfahren nach einem der vorhergehenden Ansprüche, **dadurch gekennzeichnet, dass** die Dicke (r) des Linsenrandes (6) nicht mehr als 5 mm beträgt.

9. Verfahren nach einem der vorhergehenden Ansprüche, **dadurch gekennzeichnet, dass** der Durchmesser (DB) der im Wesentlichen planen optisch wirksamen Oberfläche (5) nicht mehr als 110% des Durchmessers (DA) der konvex gekrümmten optisch wirksamen Oberfläche (4) beträgt.

10. Verfahren nach einem der vorhergehenden Ansprüche, **dadurch gekennzeichnet, dass** der Durchmesser (DB) der im Wesentlichen planen optisch wirksamen Oberfläche (5) zumindest 90% des Durchmessers (DA) der konvex gekrümmten optisch wirksamen Oberfläche (4) beträgt.

## Claims

1. Method of manufacturing a headlamp lens (2) for a vehicle headlamp, in particular for a motor vehicle headlamp (1), wherein the headlamp lens (2) comprises a lens body (3) of a transparent material with an essentially plane optically effective surface (5) and a convexly bent optically effective surface (4), wherein a preform is glass moulded into the headlamp lens (2) with an integrally moulded lens edge (6) between a first mould (40) for pressing the convexly bent optically effective surface (4), and a second mould for pressing the essentially plane optically effective surface (5), comprising a first partial mould (41) and an annular second partial mould (42) enclosing the first partial mould (41), wherein a step (60) is pressed into the headlamp lens (2) by an offset (43) between the second partial mould (42) and the first partial mould (41) depending on the volume of the preform, and wherein the first partial mould (41) is set back with respect to the second partial mould (42) at least in the region of the offset (43), wherein the essentially plane optically effective surface (5) projects towards the optical axis (20) of the headlamp lens (2) beyond the lens edge (6) or a part of the lens edge (6) by not more than 1 mm.

2. Method according to claim 1, **characterized in that** the distance between the first partial mould (41) and the first mould (40) depends on the volume of the preform.

3. Method according to claim 1 or 2, **characterized in that** the distance between the second partial mould (42) and the first mould (40) is independent of the volume of the preform.

4. Method according to claim 1, 2 or 3, **characterized in that** the second partial mould (42) contacts the first mould (40).

5. Method according to one of the preceding claims, **characterized in that** an abutment shoulder is pressed into the lens edge (6) by means of the first mould (40).

6. Method according to claim 5, **characterized in that** the abutment shoulder extends essentially orthogonally with respect to the optical axis of the headlamp lens (2).

7. Method according to one of the preceding claims, **characterized in that** the thickness (r) of the lens edge (6) is at least 2 mm.

8. Method according to one of the preceding claims, **characterized in that** the thickness (r) of the lens edge (6) is not more than 5 mm.

9. Method according to one of the preceding claims, **characterized in that** the diameter (DB) of the essentially plane optically effective surface (5) is not more than 110 % of the diameter (DA) of the convexly bent optically effective surface (4).

10. Method according to one of the preceding claims, **characterized in that** the diameter (DB) of the essentially plane optically effective surface (5) is at least 90 % of the diameter (DA) of the convexly bent optically effective surface (4).

## Revendications

1. Procédé de fabrication d'une lentille de phare (2) pour un phare de véhicule, en particulier pour un phare de véhicule automobile (1), dans lequel la lentille de phare (2) comprend un corps de lentille (3) composé d'un matériau transparent avec une surface utile optique (5) sensiblement plane et une surface utile optique (4) de courbure convexe, dans lequel une ébauche est moulée par pressage entre un premier moule (40) pour presser la surface utile optique (4) de courbure convexe et un second moule pour presser la surface utile optique (5) sensiblement plane, qui comprend un premier demi-moule (41) et un second demi-moule (42) annulaire entourant le premier demi-moule (41), vers la lentille de phare (2) avec un bord de lentille façonné (6), dans lequel, par un décalage (43) dépendant du volume de l'ébauche (43) entre le second demi-moule (42) et le premier demi-moule (41), un gradin (60) est pressé dans la lentille de phare (2), et dans lequel le premier demi-moule (41) est en retrait au moins au niveau du décalage (43) par rapport au second demi-moule (42), la surface utile optique (5) sensiblement plane ne faisant pas saillie de plus de 1 mm en direction de l'axe optique (20) de la lentille de phare (2) au-delà du bord (6) de la lentille ou d'une partie du bord (6) de la lentille.

2. Procédé selon la revendication 1, **caractérisé en ce que** la distance entre le premier demi-moule (41) et le premier moule (40) est dépendante du volume de l'ébauche.

3. Procédé selon la revendication 1 ou 2, **caractérisé en ce que** la distance entre le second demi-moule (42) et le premier moule (40) est indépendante du volume de l'ébauche.

4. Procédé selon la revendication 1, 2 ou 3, **caractérisé en ce que** le second demi-moule (42) touche le premier moule (40).

5. Procédé selon une des revendications précédentes, **caractérisé en ce que**, au moyen du premier moule (40), un épaulement d'appui est pressé dans le bord (6) de la lentille.

6. Procédé selon la revendication 5, **caractérisé en ce que** l'épaulement d'appui s'étend de manière sensiblement orthogonale à l'axe optique de la lentille de phare (2).

7. Procédé selon une des revendications précédentes, **caractérisé en ce que** l'épaisseur (r) du bord de lentille (6) est au moins de 2 mm.

8. Procédé selon une des revendications précédentes, **caractérisé en ce que** l'épaisseur (r) du bord de lentille (6) n'est pas supérieure à 5 mm.

9. Procédé selon une des revendications précédentes, **caractérisé en ce que** le diamètre (DB) de la surface utile optique (5) sensiblement plane ne représente pas plus de 110 % du diamètre (DA) de la surface utile optique (4) de courbure convexe.

10. Procédé selon une des revendications précédentes, **caractérisé en ce que** le diamètre (DB) de la surface utile optique (5) sensiblement plane représente au moins 90 % du diamètre (DA) de la surface utile optique (4) de courbure convexe.
